Europäisches Patentamt

European Patent Office

Office européen des brevets

(19)

(11) **EP 0 929 145 A2**

(12) **EUROPEAN PATENT APPLICATION**

(43) Date of publication:
**14.07.1999 Bulletin 1999/28**

(51) Int Cl.$^6$: **H02P 21/00**

(21) Application number: **99300247.6**

(22) Date of filing: **13.01.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **13.01.1998 JP 1643898**

(71) Applicant: **FANUC LTD
Minamitsuru-gun, Yamanashi 401-0597 (JP)**

(72) Inventors:
• **Iwashita, Yasusuke,
9-307, FANUC Manshonharimomi
Minamitsuru-gun, Yamanashi, 401-0511 (JP)**
• **Kawamura, Hiroyuki
Minamitsuru-gun, Yamanashi, 401-0301 (JP)**

(74) Representative: **Billington, Lawrence Emlyn et al
Haseltine Lake & Co.,
Imperial House,
15-19 Kingsway
London WC2B 6UD (GB)**

(54) **Field oriented control for the drive of a pressing machine**

(57)     Current control for an AC servomotor for driving moving elements of a pressing machine is carried out by utilizing d-q conversion. A phase correction value θm is added to a rotor phase θr to compensate for a torque reduction associated with magnetic saturation. D-q conversion is effected in accordance with a three-phase actual current of a servomotor 4 and a corrected rotor phase θ (= θr + θm), whereby a d-phase current Id in the direction of a magnetic flux formed by a magnetic field system and a q-phase current Iq perpendicular to the d-phase current Id are obtained. Current loop control is effected with a q-phase current command used as a torque command and with a d-phase current command adjusted to 0, whereupon command voltages Vd and Vq are obtained. Conversion into three-phase voltage commands Vu, Vv and Vw is effected by means of a two-phase-to-three-phase converter 2, and the servomotor 4 is driven by means of a power amplifier 3. With this arrangement, there is no current loop phase lag, reactive current can be reduced, and high torque can be generated. Thus, high-speed operation can be carried out with reduced heat release from a motor.

F I G. 1

**Description**

BACKGROUND OF THE INVENTION

Field of the Invention

The present invention relates to a pressing machine having a press shaft driven by means of an AC servomotor.

Description of the Related Art

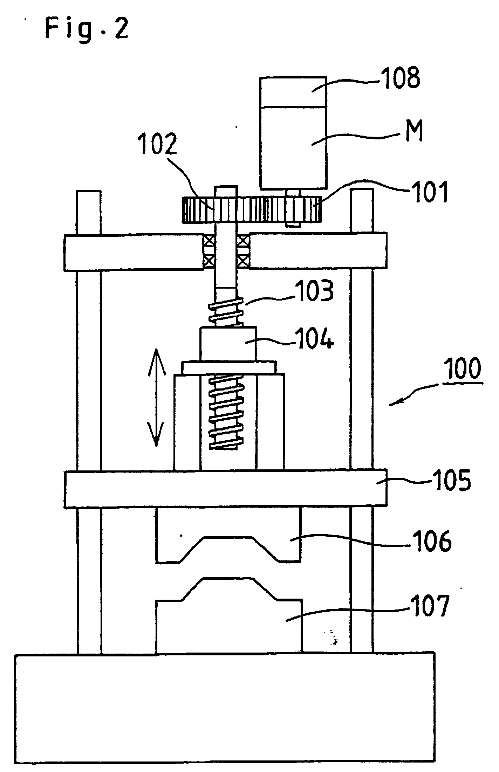

Conventionally known is a pressing machine of which moving elements are driven by means of an AC servomotor. Referring now to the schematic view of FIG. 2, an example of the pressing machine of this type will be described in brief.

A pressing machine 100 is an apparatus in which a plate material is interposed between a top die 106 and a bottom die 107, and is pressed to be shaped between the two dies. Pressing force is supplied by means of a servomotor M. The rotation of the servomotor M is transmitted to a ball screw 103 by means of a transmission mechanism including gears 101 and 102, etc. The ball screw 103 is engagedly fitted with a nut 104 that has a ram 104 at the other end. When the ball screw 103 rotates, the nut 104 and the ram 105 move in the axial direction, thereby changing the distance between the top and bottom forces 106 and 107.

The respective positions of the forces can be detected by means of a position detector 108 that is attached to the servomotor M.

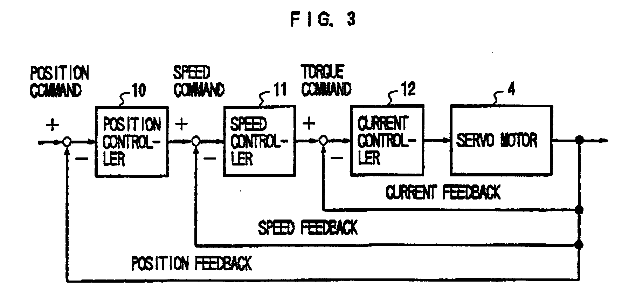

In this system, which is designed so that the AC servomotor for driving the moving elements of the pressing machine is drivingly controlled, each mechanical portion is subjected to position control. In effecting this position control, position and speed detectors are attached to the AC servomotor. As shown in FIG. 3, position loop control is carried out to obtain a speed command in accordance with a position command and a position feedback signal by means of a position control section 10, while speed loop control is carried out to obtain a torque command in accordance with the speed command and a speed feedback signal by means of a speed control section 11. Further, current loop control is carried out for each of three phases in response to the torque command by means of a current control section 12, whereby a voltage command corresponding to current to be supplied is obtained. Based on this command voltage, the AC servomotor is driven by means of a power amplifier such as an inverter. In some cases, speed loop control may be performed without effecting position control.

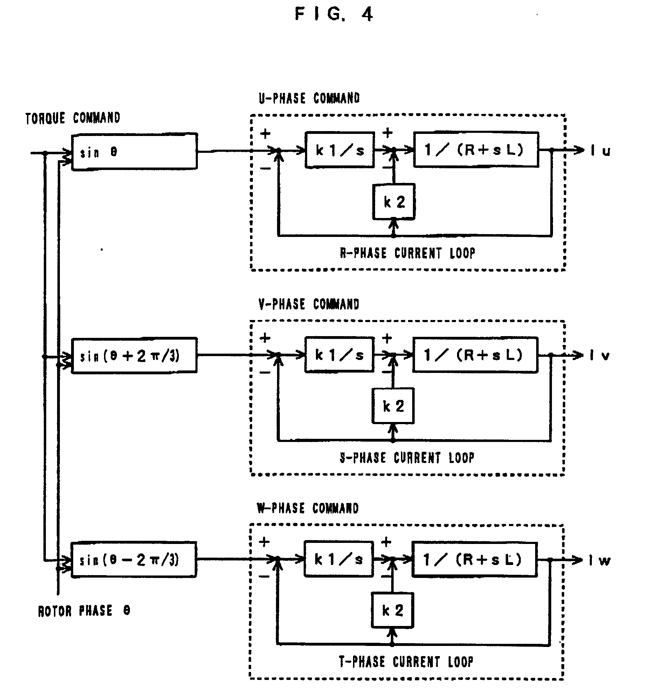

FIG. 4 is a block diagram showing a conventional current control system for the AC servomotor. Based on a torque command delivered from a speed loop and a rotor phase $\theta$ from a rotor phase detector attached to the AC servomotor, a U-phase current command is obtained by multiplying the torque command by sin $\theta$ in the U-phase (rotor phase is based on the U-phase), a V-phase current command is obtained by multiplying the torque command by sin $(\theta + 2\pi/3)$ with a phase difference of 120° in the V-phase, and a W-phase current command is obtained by multiplying the torque command by sin$(\theta - 2\pi/3)$ with an additional phase difference of 120° in the W-phase.

In any of the phases, current loop control based on integral-plus-proportional control is effected to obtain a voltage command (PWM command) in accordance with the current command and a current feedback signal for each phase, and the servomotor is driven by means of an servo amplifier such as an inverter. In FIG. 4, k1, k2, R and L in each current loop are an integral gain, proportional gain, winding resistance of the servomotor, and inductance of the servomotor, respectively. Further, s in each current loop is a differential operator.

In the current control system described above, the frequency of AC current (frequency of AC current generated in the inverter) increases as the rotational speed of the servomotor increases. In view of the frequency characteristics of the control system, therefore, the gain may be lowered, or a phase lag may be caused. Thus, the power factor is lowered, entailing increased driving current, lowered maximum torque, etc.

In an electric pressing machine, an AC servomotor is used for its press shaft. In this electric pressing machine, pressing operation is carried out continuously and repeatedly. In order to improve the production efficiency, therefore, it is advisable to speed up the pressing operation. To attain this, the AC servomotor for driving each moving element of the pressing machine must be driven at high speed. If the high-speed operation is carried out, however, the driving current increases, as described above, so that heat release from the motor increases, thus constituting a hindrance to the speed-up of the pressing operation. Further, the speed-up of the pressing operation requires generation of high torque. Since the maximum torque is lowered, as mentioned before, however, high torque cannot be generated without problem.

OBJECT AND SUMMARY OF THE INVENTION

The object of the present invention is to provide a pressing machine capable of high-speed pressing operation.

According to the present invention, there is provided a pressing machine having elements driven by means of an AC servomotor, wherein a control section of said AC servomotor has a d-q conversion function for conversion from a three-phase mode into a two-phase mode composed of a d-phase in the direction of a magnetic flux formed by a magnetic field system and a q-phase perpendicular to the d-phase, the d-q conversion function serving for the current control of the AC servomotor. In preferred practice, three-phase-to two-phase conversion is effected with use of the driving current and rotor phase of the AC servomotor for driving the moving elements of the pressing machine, whereupon a d-phase current in the direction of a magnetic flux formed by a magnetic field system and a q-phase current perpendicular to the d-phase current are obtained and used as feedback currents. Current feedback control is carried out with a q-phase current command used as a torque command and with a d-phase current command adjusted to zero, whereupon d-and q-phase command voltages are obtained. Two-phase-to-three-phase conversion is effected to obtain commands for the individual phases of the AC servomotor with use of the d- and q-phase command voltages, and the AC servomotor is drivingly controlled.

If the torque command lq for the AC servomotor has a value not lower than the value of current where magnetic saturation occurs, phase lead control is effected to advance the phase of the q-phase current, thereby preventing reduction of the output torque of the AC servomotor and ensuring high-speed, high-torque drive of the servomotor.

According to the present invention, as described above, the AC servomotor can be driven at high speed and with high torque and small driving current, so that heat release from the servomotor can be reduced to facilitate high-speed pressing operation. Thus, the production efficiency can be improved. Since the heat release is reduced, the capacity of cooling equipment for the motor can be also reduced.

Further, pressing a thick plate, which requires high-speed, high-torque operation, can be carried out without hindrance. Since a force substantially equal to the existing pressing force of the pressing machine can be generated even in a low motor speed zone, moreover, the level of noises from pressing shock can be lowered.

BRIEF DESCRIPTION OF THE DRAWINGS

The foregoing and other objects and features of the invention will become apparent from the following description of preferred embodiments of the invention with respect to the accompanying drawings, in which:

FIG. 1 is a block diagram illustrating current control of an AC servomotor for driving moving elements of a pressing machine according to one embodiment of the invention;
FIG. 2 is a schematic view of the pressing machine having moving elements driven by means of the AC servomotor;
FIG. 3 is a block diagram illustrating control of position, speed, and current loops of the servomotor;
FIG. 4 is a block diagram illustrating conventional current loop control;
FIG. 5 is a diagram showing magnetic flux vectors on the d-q coordinates of the servomotor;
FIG. 6 is a diagram showing a magnetic flux vector falling within a magnetic saturation zone on the d-q coordinates of the servomotor;
FIG. 7 is a diagram illustrating the way a magnetic flux formed by a q-phase current gets out of the magnetic saturation zone when the phase of the q-phase current is advanced by an angle θ;
FIG. 8 is a diagram for illustrating the relation between actual d-q coordinates and d-q coordinates for control;
FIG. 9 is a diagram illustrating the way a phase lead angle is settled depending on the value of a current command;
FIG. 10 is a flowchart for illustrating current loop processing a processor of a digital servo circuit executes with every current loop processing period, for the AC servomotor for driving the moving elements of the pressing machine according to the invention;
FIG. 11A is a diagram showing the value of current flowing through an AC servomotor for driving moving elements of a pressing machine, obtained when the servomotor is subjected to conventional current control;
FIG. 11B is a diagram showing the value of current flowing through the AC servomotor for driving the moving elements of the pressing machine, obtained when the servomotor is subjected to current control based on d-q conversion;
FIG. 12A is a diagram showing the maximum torque of the AC servomotor for driving the moving elements of the pressing machine, obtained when the servomotor is subjected to conventional current control; and
FIG. 12B is a diagram showing the maximum torque of the AC servomotor for driving the moving elements of the pressing machine, obtained when the servomotor is subjected to current control based on d-q conversion.

DETAILED DESCRIPTION OF THE PREFERRED EMBODIMENTS

According to the present invention, d-q conversion between a three-phase mode and a two-phase mode is used as a method for preventing increase of driving current attributable to reduction in power factor and also preventing lowering of the maximum torque, in current control for an AC servomotor. In the d-q conversion, a d-axis is set in the direction of a magnetic flux that is generated by a magnetic field, a q-axis is set at right angles to the d-axis, and a current Id and voltage Vd in the d-axis direction and a current Iq and voltage Vq in the q-axis direction are obtained and controlled.

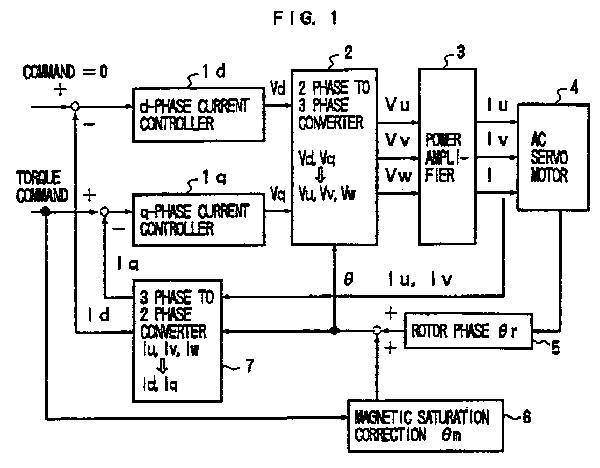

FIG. 1 is a block diagram of a current control section according to one embodiment of the present invention for current control based on the d-q conversion. A current control section for an AC servomotor for driving moving elements of a pressing machine can be composed of the current control section shown in the block diagram of FIG. 1. The current control section shown in FIG. 1 is used in place of a current control section 12 and a servomotor 4 shown in the block diagram of FIG. 3.

Referring to FIG. 1, there is shown a two-phase-to-three-phase converter 2, which carries out the operation of the following expression (1) for conversion into three-phase or U-, V-, and W-phase command voltages Vu, Vv and Vw in accordance with a d-phase command voltage Vd delivered from a d-phase current controller 1d for d-phase current loop control, a q-phase command voltage Vq delivered from a q-phase current controller 1q for q-phase current loop control, and a corrected rotor phase $\theta$ (= $\theta$r + $\theta$ m) obtained by adding a correction value $\theta$ m to a rotor phase $\theta$ r:

$$\begin{bmatrix} Vu \\ Vv \\ Vw \end{bmatrix} = \sqrt{2}/3 \begin{bmatrix} \cos\theta & -\sin\theta \\ \cos(\theta - 2\pi/3) & -\sin(\theta - 2\pi/3) \\ \cos(\theta + 2\pi/3) & -\sin(\theta + 2\pi/3) \end{bmatrix} \cdot \begin{bmatrix} Vd \\ Vq \end{bmatrix}$$

$$\cdots \quad (1)$$

In FIG. 1, moreover, numeral 3 denotes a power amplifier composed of an inverter or the like; 4, any one of AC servomotors; 5, a rotor phase detector for detecting the rotor phase $\theta$ r of the AC servomotor 4; 6, magnetism saturation correcting means for correcting the rotor phase when magnetism saturation is caused in the AC servomotor 4; and 7, a three-phase-to-two-phase converter for converting three-phase or U-, V-, and W-phase currents Iu, Iv and Iw into two-phase or d- and q-phase currents Id and Iq.

The three-phase-to-two-phase converter 7 carries out the operation of the following expression (2) to obtain the d- and q- phase currents Id and Iq in accordance with any two-phase currents (Iu and Iv in FIG. 1), out of U-, V-, and W-phase actual currents of the AC servomotor 4 detected by means of a current detector (not shown) and the corrected rotor phase $\theta$ obtained by wadding the correction value $\theta$ m to the detected rotor phase $\theta$ r:

$$\begin{bmatrix} Id \\ Iq \end{bmatrix} = \sqrt{2} \begin{bmatrix} \sin(\theta + \pi/3) & \sin\theta \\ \cos(\theta + \pi/3) & \cos\theta \end{bmatrix} \cdot \begin{bmatrix} Iu \\ Iv \end{bmatrix}$$

$$\cdots \quad (2)$$

Referring now to FIG. 1, there will be described the operation of this current control system.

By setting a d-phase current command value to "0" and setting a q-phase current command value to a torque command delivered from a speed loop (speed control section 11 of FIG. 3), current deviations of a d-phase and q-phase are obtained by subtracting the d- and q-phase currents Id and Iq delivered from the three-phase-to-two-phase converter 7 from the d- and q-phase current command values, respectively. Then, the d- and q-phase command voltages Vd and Vq are obtained by carrying out proportional-plus-integral control current loop control in the conventional manner by means of the current controllers 1d and 1q.

Subsequently, the U-, V-, and W-phase command voltages Vu, Vv and Vw are obtained from the resulting d- and q-phase command voltages Vd and Vq by means of the two-phase-to-three-phase converter 2. These command voltages are delivered to the power amplifier 3 so that the currents Iu, Iv and Iw are supplied to the individual phases of the AC servomotor 4 by means of an inverter or the like, thus drivingly controlling the servomotor 4.

In the aforementioned current control carried out after the d-q conversion into the two-phase mode, a d-phase actual current is controlled to be equal to the command value "0" without any phase lag in a current loop, so that there is only a q-phase active current. Thus, the driving current supplied to the AC servomotor decreases, and heat release from the motor is reduced, so that the level of the load that causes overheat can be lowered. Accordingly, the drive cycle of the pressing machine can be increased in speed.

In conventional current control for each of the three phases, such as the one shown in FIG. 4, the torque characteristic is lowered by a phase lag or the like in a high-speed rotation zone, and the lowered torque prevents high-speed rotation. According to the present invention in which the current control is carried out after the d-q conversion into the two-phase mode, however, high-speed rotation can be effected without any phase lag based on the principle of the control system, so that the drive speed can be increased.

In the case of an AC servomotor with high magnetic flux density that uses rare earth metals, however, magnetic saturation is liable to occur in a magnetic circuit in the motor. When there is no magnetic saturation in the magnetic circuit in the motor, the torque that is generated with the increase of the supply current (Iq) increases in accordance with a torque constant Kt. If the supply current (Iq) increases so that the magnetic circuit is magnetically saturated, however, the maximum torque the motor can generate becomes lower than a torque value that is settled by the torque constant Kt.

Accordingly, the rotor phase $\theta$ r is subjected to the magnetic saturation correction $\theta$ m by means of the magnetism saturation correcting means 6 (see FIG. 1) during high-speed rotation that entails magnetic saturation, whereby the phase of the q-phase current Iq is advanced to prevent the torque from lowering during the high-speed rotation. The following is a description of this magnetic saturation correction.

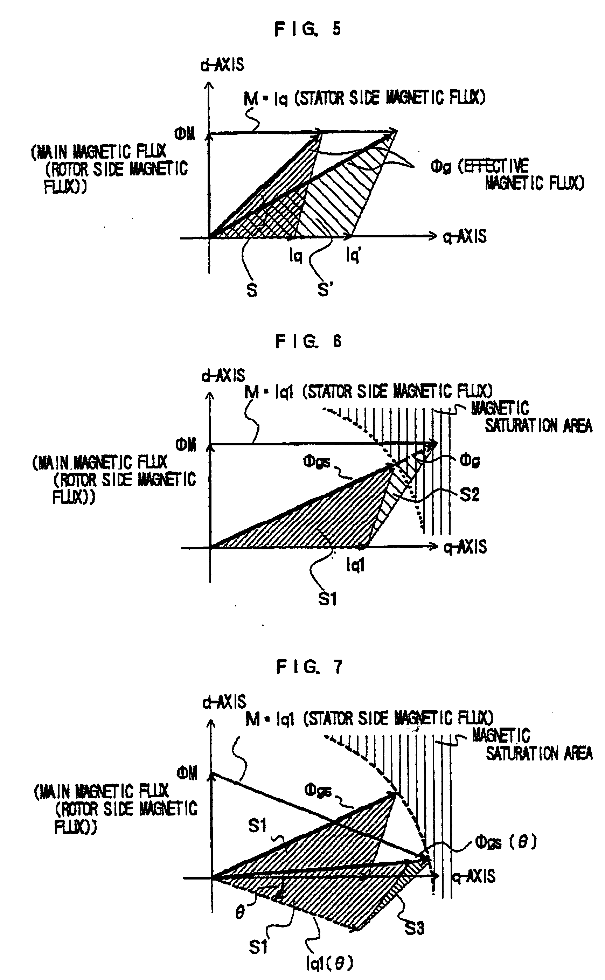

FIGS. 5, 6 and 7 are views showing magnetic flux vectors on the d-q coordinates of the AC servomotor, in which the d-axis represents the direction of the magnetic flux (main magnetic flux $\phi$ M) of a permanent magnet of a rotor, and the q-axis represents the direction of a magnetic flux M· Iq that is generated by the active current Iq. The d- and q-axes cross each other at right angles.

Thus, a resultant magnetic flux that is obtained by adding, in terms of vector, the main magnetic flux $\Phi$M of the permanent magnet of the rotor and the magnetic flux M· Iq occurring based on the active current Iq is an active magnetic flux $\Phi$g for torque formation. Atorque T generated in this case is equal to the exterior product of the active magnetic flux $\Phi$g and the active current Iq, which is given by

$$T = \Phi g \times Iq = (\Phi M + M \cdot Iq) \times Iq, \tag{3}$$

where the torque T is proportional to an area S of a triangle that has two sides that are equivalent to $\Phi$g and Iq, individually.

If the q-phase current is increased from Iq to Iq' in FIG. 5, the area that is indicative of the torque T increases from S (area of the triangle having one side $\Phi$g and another side Iq) to S' (area of a triangle having one elongated side $\Phi$g and another side Iq'), so that the generated torque T also increases.

If the q-phase current is further increased, the active magnetic flux $\Phi$g increases so that magnetic saturation occurs in the magnetic circuit in the motor. When the active magnetic flux $\Phi$g enters a magnetic saturation zone, however, it never increases even if the q-phase current Iq is increased, so that the torque ceases to increase.

In the magnetic flux vector diagram of FIG. 6, the vertically hatched portion diagrammatically indicates a magnetic saturation zone. The magnetic flux $\Phi$g formed by an increased q-phase Iq1 enters the magnetic saturation zone, and the magnetic flux actually formed by magnetic saturation becomes $\Phi$gs that is smaller than $\Phi$g. In terms of the area S in FIG. 6 for comparison of the level of the generated torque, the torque to be originally generated has a value corresponding to the area (S1 + S2 in FIG. 6) of a triangle having one side $\Phi$g and another side Iq1, while the torque actually generated by magnetic saturation has a value corresponding to the area (S1 in FIG. 6) of a triangle having one side $\Phi$gs and another side Iq1. Thus, the torque is reduced to S1/(S1 + S2) as the magnetic flux $\Phi$g formed by the increased q-phase current Iq1 enters the magnetic saturation zone.

Magnetic saturation correction is carried out to cope with this torque reduction. As described below, this magnetic saturation correction is characterized by advancing the phase of the q-phase current Iq to prevent the magnetic flux $\Phi$g from entering the magnetic saturation zone.

If the phase of the q-phase current Iq1 is advanced for a certain angle $\theta$ when the magnetic flux $\Phi$gs formed by the q-phase current Ig1 in the q-axis direction is at the boundary of the magnetic saturation zone, as shown in the magnetic flux vector diagram of FIG. 6, the phase of the magnetic flux $\Phi$gs advances by the angle $\theta$ at the same time. Thereupon, the magnetic flux $\Phi$g, advanced by the angle $\theta$ in phase, moves a certain distance away from the boundary of the magnetic saturation zone. Accordingly, the q-phase current Iq1 can be further increased so that the magnetic flux $\Phi$gs in this state reaches the boundary of the magnetic saturation zone.

In consequence, the area S1 (see FIG. 6) of the triangle having the two sides $\Phi$gs and Iq1, indicative of the generated torque, can be increased by a margin corresponding to an area S3 so that it is equal to the area (S1 + S3) of a triangle having one side $\Phi$ gs($\theta$) and another side Iq1($\theta$), as shown in FIG. 7, by executing magnetic saturation processing such that the q-phase current is advanced by $\theta$ to increase its value from Iq1 to Iq1($\theta$). The area increment S3 attributable to this magnetic saturation correction is smaller than the area decrement S2 (FIG. 6) that is caused when the magnetic saturation correction is not effected. Nevertheless, the area increment S3 effectively serves for the torque increase.

Control of the phase lead of the q-phase current can be carried out actually by advancing the rotor phase detected by means of the rotor phase detector, thereby advancing d-q coordinates for control ahead of actual d-q coordinates. The mode of control of the control system is a conventional one.

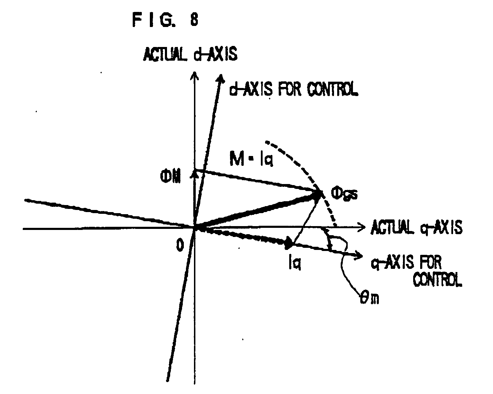

Referring now to FIG. 8, there will be described the relation between the actual d-q coordinates and the d-q coordinates for controL

The control of the phase lead of the q-phase current is carried out on the d-q coordinates for control, the phase of which is advanced by $\theta$ m ahead of the actual d-q coordinates. Magnetic saturation correction can be effected by supplying the q-phase current in the direction of the q-axis of the d-q coordinates for control. Thus, the control system performs control in a conventional manner.

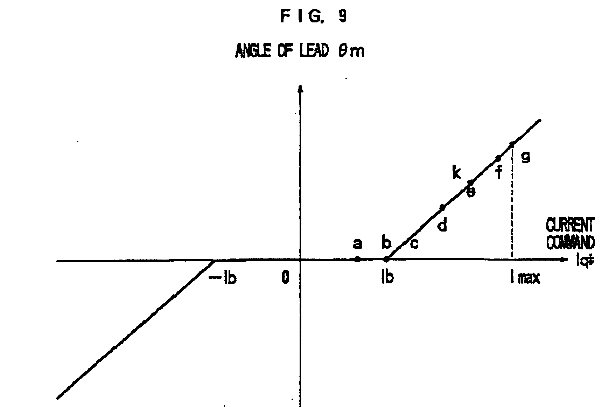

Referring now to FIG. 9, there will be described the phase lead angle $\theta$ m for the magnetic saturation correction according to the present invention.

The graph of FIG. 9 indicates that the lead angle $\theta$ m is obtained from the current command Iq*.

Referring to FIG. 9, there is shown the lead angle $\theta$m that is set at 0° when the absolute value of the current command Iq* is smaller than the set value Ib. If the absolute value of the current command Iq* exceeds the set value Ib, on the other hand, the lead angle $\theta$ m is linearly increased in proportion to the current command Iq*. Thus, the relation between the lead angle $\theta$ m and the current command Iq* can be represented as follows:

$$\theta m = k(abs(Iq*)\text{-}Ib)sign(Iq*), \tag{4}$$

where abs(Iq*) > Ib is given, and

$$\theta m = 0, \tag{5}$$

where abs(Iq*)<Ib is given.

In these expressions, Iq* is a q-phase command current; Ib, a current value for assigning the value of the current command which starts to enter the magnetic saturation zone starts to be entered; k, a proportional constant; abs, absolute value; and sign, a sign. The proportional constant k is a magnetic saturation coefficient, which depends on the varied magnetic saturation characteristics for each motor and can be settled experimentally.

Therefore, magnetic saturation correction need not be effected in the case where the level of the current command Iq* is so low that the generated magnetic flux is off the magnetic saturation zone. Accordingly, motor control is carried out with the lead angle $\theta$ m at 0° without subjecting the current command Iq* to phase controL In the case where the current command Iq* exceeds the set value Ib so that the generated magnetic flux falls within the magnetic saturation zone, on the other hand, magnetic saturation correction is carried out using expression (4). More specifically, $\theta$ m corresponding to the current command Iq* is obtained according to expression (4), and control is carried out on the d-q coordinates for control, the phase of which is advanced by $\theta$ m ahead of the actual d-q coordinates.

The phase lead corresponding to the degree of magnetic saturation can be set depending on the extent to which the current command Iq* exceeds the value Ib of the current command which starts to enter the magnetic saturation zone, and can be settled according to the difference between the current command Iq* and the set current Ib ($\theta$ m = k(Iq* - Ib) is obtained according to expression (4) if Iq* > 0 is given).

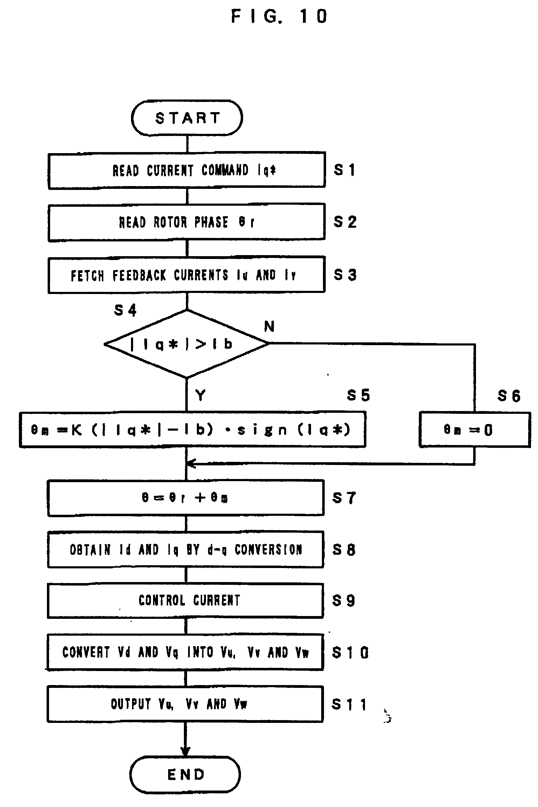

Referring now to the flowchart of FIG. 10, there is shown processing a processor of a digital servo circuit for controlling each servomotor in a control device for controlling the pressing machine executes with every current loop processing period. Since the pressing machine and the digital servo circuit are constructed in the same manner as conventional ones, a description of their arrangements is omitted therein.

The processor of the digital servo circuit carries out conventional position loop processing and speed loop processing (by the position control section 10 and the speed control section 11 of FIG. 3) in response to a position command (or speed command), thereby obtaining the current command (torque command) Iq*. At every current loop processing period, the processor reads the current command Iq* (Step S1), and fetches the rotor phase $\theta$ r and u- and v-phase current feedback values Iu and Iv from the rotor phase detector (Steps S2 and S3).

Then, the processor determines whether or not the current value Ib, which is set for magnetic saturation, is exceeded by the absolute value of the read current command Iq* (Step S4). If the set value Ib is not exceeded, the phase correction value θ m is set at "0" (Step S6). If the set value lb is exceeded, the operation of expression (4) is carried out to obtain the phase correction value θ m (Step S6 and Step S5). Substantially, the corrected rotor phase. θ is obtained by adding the phase correction value θ m to the rotor phase θ r read in Step S2 (Step S7). Based on the corrected rotor phase θ and the u- and v-phase current feedback values lu and lv fetched in Step S3, the operation of expression (2) is carried out to obtain the two-phase currents Id and Iq from the three-phase currents Iu, Iv and Iw (Step S8).

Conventional current loop processing (proportional-plus-integral control) is carried out to obtain the d-phase command voltage Vd with the obtained d-phase current Id used as a feedback current and with the d-phase current command set at "0".

Further, current loop processing is carried out to obtain the q-phase command voltage Vq with the current command Iq* read in Step S1 used as a q-phase current command and with the q-phase current value Iq calculated in Step S8 used as a feedback current (Step S9).

D-q conversion is effected according to expression (1), based on the d- and q-phase command voltages Vd and Vq thus obtained and the rotor phase θ advanced by the correction in Step S7. The three-phase voltages Vu, Vv and Vw are obtained from two-phase voltages Vd and Vq and are delivered as voltage commands (PWM commands) to the power amplifier 6 (Steps S10 and S11). The power amplifier performs PWM control by means of an inverter, and supplies the currents Iu, Iv and Iw for the individual phases to the AC servomotor 4 to drive the same.

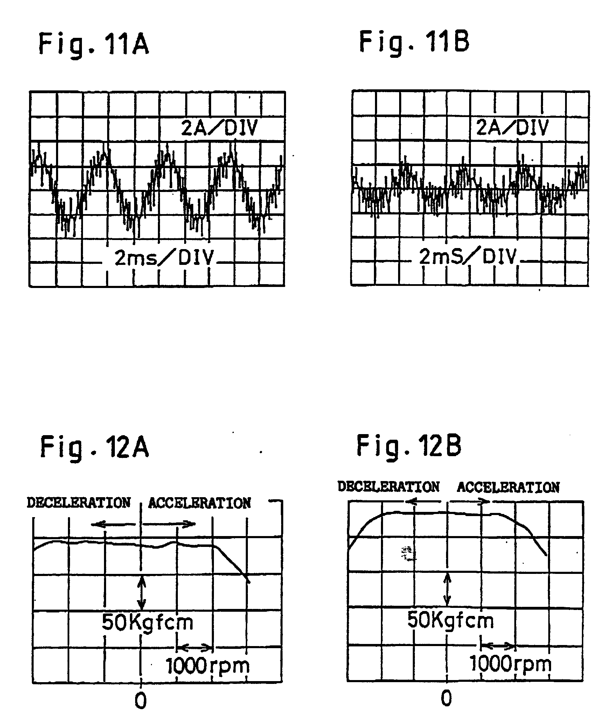

FIG. 11A shows the result of measurement of current that flows through an AC servomotor for driving moving elements of a pressing machine in the case where the conventional current control for three individual phases is applied to the AC servomotor. FIG. 11B shows the result of measurement of current that flows through the AC servomotor for driving the moving elements of the pressing machine in the case where the aforementioned current control system based on d-q conversion is applied to the AC servomotor. In FIGS. 11A and 11B, each section of the axis of abscissa (axis for time) represents 2 milliseconds, while each section of the axis of ordinate (axis for current value) represents two amperes.

As seen from FIG. 11B (present invention) and FIG. 11A (prior art) for comparison, the current value is lowered by a margin for the reduction of reactive current (d-phase current) in the case where the current control system based on d-q conversion is applied to the AC servomotor.

FIG. 12A shows the maximum torque generated by the AC servomotor for driving the moving elements of the pressing machine in the case where the conventional current control for three individual phases is applied to the AC servomotor. FIG. 11B shows the maximum torque generated by the AC servomotor for driving the moving elements of the pressing machine in the case where the aforementioned current control system based on d-q conversion is applied to the AC servomotor.

As seen from FIG. 12B (present invention) and FIG. 12A (prior art) for comparison, the maximum torque obtained with use of the current control system based on d-q conversion is about 20% to 30% higher than the maximum torque obtained with use of the conventional current control system (FIG. 12A). According to the current control system of the invention, high torque can be generated even in the high-speed rotation zone.

## Claims

1.   A pressing machine having moving elements driven by means of an AC servomotor, wherein a control section of said AC servomotor has a d-q conversion function for conversion from a three-phase mode into a two-phase mode composed of a d-phase in the direction of a magnetic flux formed by a magnetic field system and a q-phase perpendicular to the d-phase, the d-q conversion function serving for the current control of the AC servomotor.

2.   A pressing machine or claimed in claim 1, which includes

a q-phase current controller which adjusts the value of a current command given to the AC servomotor to the value of a q-phase current command, receives the difference between the q-phase current command and the q-phase current delivered from the three-phase-to-two-phase converter, and outputs a q-phase command voltage;

a d-phase current controller which adjusts the value of a d-phase current command to zero, receives the difference between the d-phase current command and the d-phase current delivered from the three-phase-to-two-phase converter, and outputs a d-phase command voltage; and

a two-phase-to-three-phase converter which receives the q-phase command voltage from the q-phase current controller and the d-phase command voltage from the d-phase current controller, effects two-phase-to-three-phase conversion, and outputs voltage commands for the individual phases of the AC servomotor.

3. The pressing machine according to claim 2, wherein said control section of said AC servomotor includes correcting means for advancing the phase of the q-phase current depending on an angle corresponding to the value of the current command given to the AC servomotor.

4. The pressing machine according to claim 3, wherein said correcting means obtains a phase lead angle θ m of the q-phase current as follows:

$$\theta\, m = 0\ (0 \leqq Iq^* \leqq Ib),$$

or

$$\theta\, m = k\cdot\theta - s(Ib < Iq^*, \text{ where k and s are constants}),$$

where Iq* is the current command given to the AC servomotor.

# F I G. 1

# Fig.2

FIG. 3

# F I G. 4

F I G. 5

F I G. 6

F I G. 7

F I G. 8

F I G. 9

ANGLE OF LEAD $\theta$ m

# FIG. 10

START

| READ CURRENT COMMAND Iq* | S1 |

| READ ROTOR PHASE θr | S2 |

| FETCH FEEDBACK CURRENTS Iu AND Iv | S3 |

S4 — $|Iq*| > Ib$ — N

Y — S5 — S6

| $\theta_m = K(|Iq*| - Ib) \cdot sign(Iq*)$ | | $\theta_m = 0$ |

| $\theta = \theta_r + \theta_m$ | S7 |

| OBTAIN Id AND Iq BY d-q CONVERSION | S8 |

| CONTROL CURRENT | S9 |

| CONVERT Vd AND Vq INTO Vu, Vv AND Vw | S10 |

| OUTPUT Vu, Vv AND Vw | S11 |

END

# Fig. 11A

2A/DIV

2ms/DIV

# Fig. 11B

2A/DIV

2mS/DIV

# Fig. 12A

DECELERATION   ACCELERATION

50Kgfcm

1000rpm

0

# Fig. 12B

DECELERATION   ACCELERATION

50Kgfcm

1000rpm

0